# EUROPÄISCHE PATENTSCHRIFT

(11) **EP 1 964 024 B1**
(45) Veröffentlichungstag und Bekanntmachung des Hinweises auf die Patenterteilung: **19.10.2011**
(21) Anmeldenummer: 06829827.2
(22) Anmeldetag: 21.12.2006
(51) Int. Cl.: G06K 7/00

(54) **SMART CARD CONNECTOR MIT LANDENDEN KONTAKTEN UND DECKELFEDER ALS KARTENBREMSE**
SMART CARD CONNECTOR COMPRISING LANDING CONTACTS AND A COVER SPRING AS A CARD STOPPER
CONNECTEUR DE CARTE A PUCE A CONTACTS A ATTERRISSAGE ET RESSORT DE COUVERCLE EN TANT QUE FREIN DE CARTE

(30) Priorität: 22.12.2005 DE 102005061641
(43) Veröffentlichungstag der Anmeldung: 03.09.2008
(73) Patentinhaber: Amphenol-Tuchel Electronics GmbH, 74080 Heilbronn (DE)
(72) Erfinder: MAITERTH, Eduard, 74080 Heilbronn (DE); KERNER, Manfred, 74080 Heilbronn (DE)
(74) Vertreter: Wagner, Karl H.
(86) Internationale Anmeldenummer: PCT/EP2006/012396
(87) Internationale Veröffentlichungsnummer: WO 2007/076959

(56) Entgegenhaltungen:
- EP-A1- 0 444 396
- EP-A1- 0 444 396
- DE-A1- 4 316 303
- US-A- 4 859 199
- US-A- 6 015 311
- US-A- 6 102 723
- US-A1- 2002 055 291
- US-B2- 6 471 550

## Beschreibung

Die vorliegende Erfindung bezieht sich auf einen Smart Card Connector mit einem Kontaktträger, in dem Kontaktelemente angeordnet sind, die beim Einschieben einer Smart Card (oder Chipkarte, im Folgenden kurz: Karte) mit den Kontaktflächen der Smart Card in Kontakt gebracht werden. Smart Card Connectoren dieser Bauart sind vielfältig bekannt. Beispielsweise sei dazu auf die folgenden Druckschriften hingewiesen:
Es sei auf die folgenden Druckschriften hingewiesen:
   DE 101 29 580
   DE 39 31 508
   GB 2198 595

Bei den bekannten Smart Card Connectoren treten verschiedene Probleme auf. Beispielsweise werden beim häufigen Gebrauch des Smart Card Connectors Kontaktverschlechterungen auftreten, was zu einer geringen Steckzyklenzahl führt. Ein weiteres Problem bei Smart Card Connectoren bekannter Bauart bilden die beim Einschieben der Smart Card in den Smart Card Reader auftretenden Schleifspuren, die durch die Kontaktelemente des Smart Card Connectors auf den Kontaktflächen der Smart Card hervorgerufen werden.

Nachdem sich die vorliegende Erfindung insbesondere auf die Ausbildung der Lesekontaktelemente bezieht, wird auf diese im Folgenden einfach mit dem Begriff "Lesekontakt Bezug genommen.

Ferner haben bekannte Smart Card Connectoren verhältnismäßig große Abmessungen und verwenden zahlreiche Einzelteile, wie z.B. einen Kartenschlitten oder einen hin und her bewegbar Kartenaufnahmeschacht Ein weiteres Problem bei Smart Card Connectoren ist die geringe Abhörsicherheit.

Gemäß der vorliegenden Erfindung wird ein Smart Card Connector derart ausgebildet, dass die Nachteile des Standes der Technik vermieden werden. Die Erfindung sieht im Einzelnen vor, dass der Smart Card Connector zur Aufnahme und zur Anordnung einer Smart Card in einer Leseposition einen Kontaktträger und mindestens ein - vorzugsweise mehrere - langgestreckte ein erstes Ende (Befestigungsende) und ein zweites Ende (freies Ende) aufweisende Lesekontakte besitzt. Jedes Lesekontaktelement weist zur Kontaktierung einer Kontaktzone der Smart Card eine Kontaktkuppe auf und ferner mindestens eine Ansteuerkuppe zum Verschwenken des Lesekontakts mittels eines, im Kontaktträger zwischen einer Ausgangsposition und einer Endposition hin und her bewegbaren Schiebers derart, dass die Kontaktkuppe auf einer Kontaktfläche der Smart Card erst kurz vor dem Erreichen der Leseposition (Kartenanschlag) Card aufsetzt. Der Schieber weist vorzugsweise durch Vertiefungen gebildete Kontaktelement-Betätigungsflächen auf, die mit der bzw. den Ansteuerkuppen derart in Eingriff bringbar sind, dass die Kontaktkuppe(en) des Leserkontakts bzw. der Lesekontakte erst kurz vor Erreichen der Leseposition an die Kontaktfläche angedrückt wird bzw. werden.

Im Folgenden wird die Erfindung unter Bezugnahme auf nur einen Lesekontakt beschrieben.. Dem Fachmann ist klar, dass im Allgemeinen mehrere Lesekontakte in einem Smart Card Connector angeordnet sind, und zwar in dem anhand der Zeichnung beschriebenen Ausführungsbeispiel insgesamt sechs Lesekontakte.

Die Erfindung ist Gegenstand des Anspruchs 1, welcher durch US-A-4 859 199 abgegrenzt ist.

Neben den Lesekontakten ist ein Smart Card Connector häufig mit zu anderen Zwecken dienenden Kontaktelementen ausgestattet, beispielsweise um einen Kartenanwesenheitsschalter oder einen Endlagenschalter zu bilden.

Gemäß einer Ausgestaltung der Erfindung sind die Lesekontakte sämtlich mit ihren Befestigungsenden in dem Kontaktträger befestigt, und zwar vorzugsweise durch Einpressen in den Kontaktträger.

Der Schieber ist derart beweglich in den Kontaktträger eingesetzt, dass er vorzugsweise in etwa auf den letzten zwei Millimetern vor dem Kartenanschlag am Kontaktträger verschoben wird und sodann beim Verschieben durch eine Schräge die Ansteuerkuppen der Lesekontakte betätigt. Dabei wird der Schieber soweit in dem Smart Card Connector eingeschoben, dass die Ansteuerkuppen der Kontaktelemente auf eine Ebene, am Schieber ausgebildete Auflagefläche, zu liegen kommen. Wenn die Lesekontakte mit ihren Ansteuerkuppen auf dieser ebener Fläche des Schiebers liegen, so entwickeln die Lesekontakte keine Auswurfkomponente, d.h. die Lesekontakte drücken die eingesetzte Smart Card nicht in der Auswurfrichtung. In diesem Zustand, in dem die Ansteuerkuppen auf der ebenen Fläche des Schiebers liegen, werden von den Kontaktkuppen der Lesekontakte die Kontaktflächen der Smart Card kontaktiert.

Gemäß einer bevorzugten Ausgestaltung der Erfindung hat der Smart Card Connector einen Deckel vorzugsweise in der Form einer Metalldeckelfeder. Diese liegt auf der Oberseite des Kontaktträgers und ist an diesem vorzugsweise durch Verrastung befestigt. Dadurch, dass der Deckel für den Kontaktträger als Metalldeckelfeder ausgebildet ist, spielen bei der Kontaktgabe die Toleranzen der Karte für die auftretenden Kontaktkräfte keine Rolle.

Ein weiterer Vorteil der Verwendung einer Metalldeckelfeder besteht darin, dass diese als Kartenbremse wirkend, ausgebildet sein kann. Ferner ermöglicht die Metalldeckelfeder eine flache Bauweise für den Smart Card Reader.

Jeder der Lesekontakte besitzt an einem ersten Ende einen AnschlussabschnittlBefestigungsende und an einem zweiten oder freien Ende einen Kontaktabschnitt (Kontaktende). Der Anschlussabschnitt seinerseits weist einen Befestigungsabschnitt zur Verankerung am Kontaktträger und davon wegragend eine Anschlusszunge auf. Die Anschlussabschnitte vorzugsweise sämtlicher Lesekontakte sind mit ihren Befestigungsabschnitten am Kontaktträger befestigt, und zwar vorzugsweise eingepresst, wobei die zweiten Enden oder die Kontaktenden vorzugsweise sämtlicher Lesekontakte auslegerartig wegragen. Auf diese Weise sind sämtliche Lesekontaktanschlüsse, d.h. die Anschlusszungen der Lesekontakte gegenüber der Karteneinführschlitzseite angeordnet.

Um ein sicheres Einpressen der Lesekontakte im Kontaktträger zu erreichen, sind die Lesekontakte vorzugsweise in ihrem Befestigungsabschnitt mit harpunenartigen Vorsprüngen bzw. Rastnasen ausgestattet.

Dadurch, dass der Metalldeckel mit Vorspannung auf der Oberseite des Kontaktträgers aufliegt, wirkt er bei eingesteckter Smart Card als eine Bremse, die verhindert, dass die Smart Card durch die Rückstellfedern des Schiebers aus dem Smart Card Connector ausgestoßen wird. Alternativ kann oder Metalldeckel zu den Kartenauflageflächen hin derart vorgespannt sein, dass er mit einem Abstand gegenüber den Kartenauflageflächen beabstandet ist, der geringer als die Dicke der Karte ist.

Durch die Erfindung wird ein Smart Card Connector erhalten, der auf den Kontaktflächen der Smart Card landende Lesekontakte vorsieht, ohne dass eine Auswurfkomponente auftritt. Der vorzugsweise vorgesehene Metalldeckel dient dabei als Kartenbremse und bewirkt eine Toleranzreduzierung bzw. einen Toleranzausgleich.

Weitere Vorteile, Ziele und Einzelheiten der Erfindung ergeben sich aus der Beschreibung eines Ausführungsbeispiels anhand der Zeichnung; in der Zeichnung zeigt:
- Fig. 1: eine perspektivische Draufsicht auf die Oberseite eines Kontaktträgers eines insgesamt in Fig. 6 gezeigten Smart Card Connectors;
- Fig. 2: eine perspektivische Draufsicht auf den Kontaktträger gemäß Fig. 1 aus einer anderen Richtung;

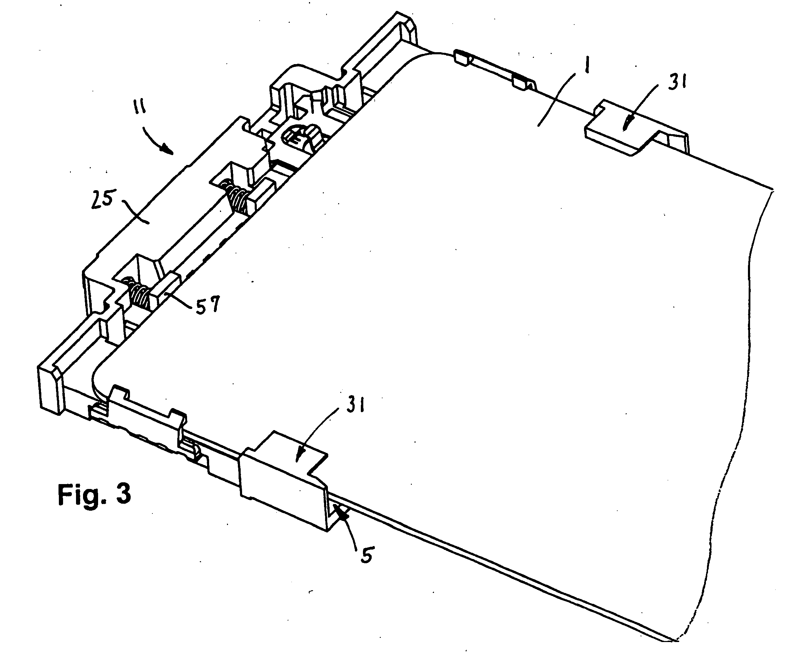

- Fig. 3: eine Draufsicht auf den Kontaktträger bei eingesetzter, aber noch nicht in ihrer Leseposition befindlicher Smart Card, und zwar ohne Verwendung eines Deckels, wie dieser in Fig. 6 gezeigt ist;
- Fig. 4: eine perspektivische Draufsicht auf die Unterseite des Kontaktträgers gemäß Figuren 1 und 2;
- Fig. 5: eine perspektivische Draufsicht auf einen Schieber, der wie in den Figuren 1, 2 und 4 gezeigt, in den Kontaktträger hin und her bewegbar gesetzt ist;
- Fig. 6: eine perspektivische Draufsicht auf den erfindungsgemäß mit einem Metalldeckel abgedeckten Smart Card Reader;
- Fig. 7: eine perspektivische Draufsicht auf einen erfindungsgemäß als Metalldeckelfeder ausgebildeten Deckel des Smart Card Connectors;
- Fig. 8: einen Schnitt in etwa längs Linie A-A in Fig. 1, wobei die Smart Card in den Kontaktträger eingesetzt ist und am Schieber anliegt, diesen aber noch nicht in seine Anschlagstellung, die der Leseposition der Karte entspricht, verschoben hat;
- Fig. 9: eine Schnittansicht ähnlich Fig. 8, wobei hier dargestellt ist, dass der Schieber um den Abstand A durch die Karte verschoben wurde, so dass die Lesekontakte mit ihren Ansteuerkuppen auf Auflageflächen des Schiebers sitzen, und mit ihren Kontaktkuppen an die Kontaktzonen der Smart Card angedrückt sind;
- Fig. 10: eine perspektivische Ansicht der Lesekontakte; und
- Fig. 11: eine perspektivische Ansicht eines der Lesekontakte, insbesondere zur Darstellung der harpunenartigen Vorsprünge zum Zwecke der Befestigung in dem Kontaktträger.

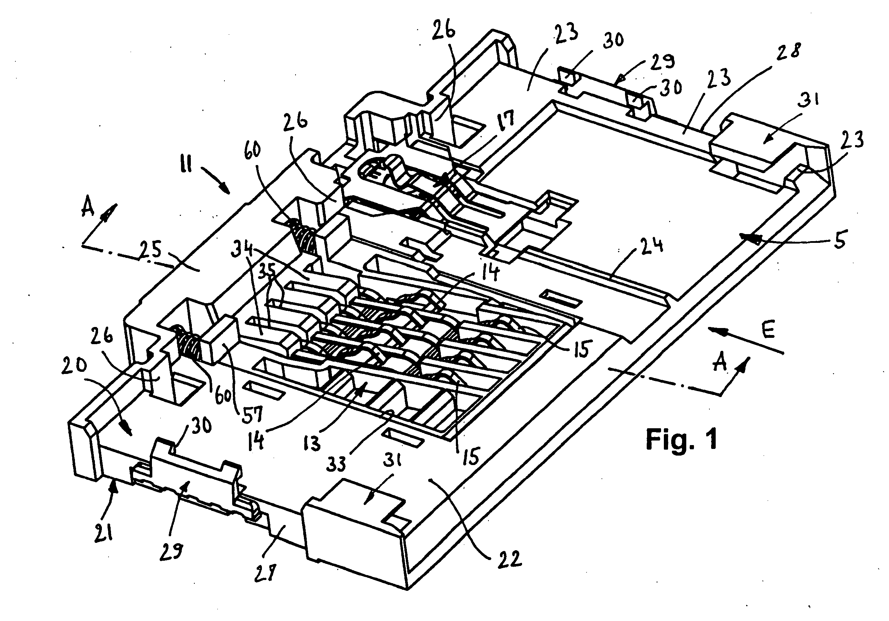

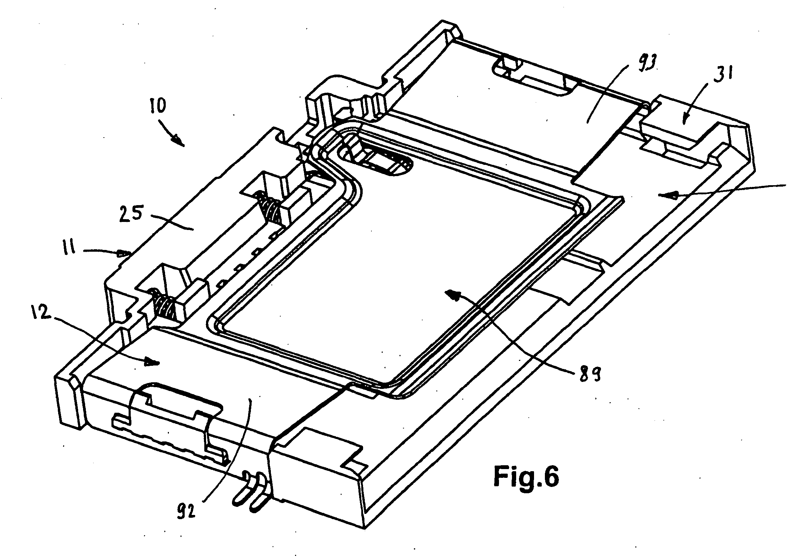

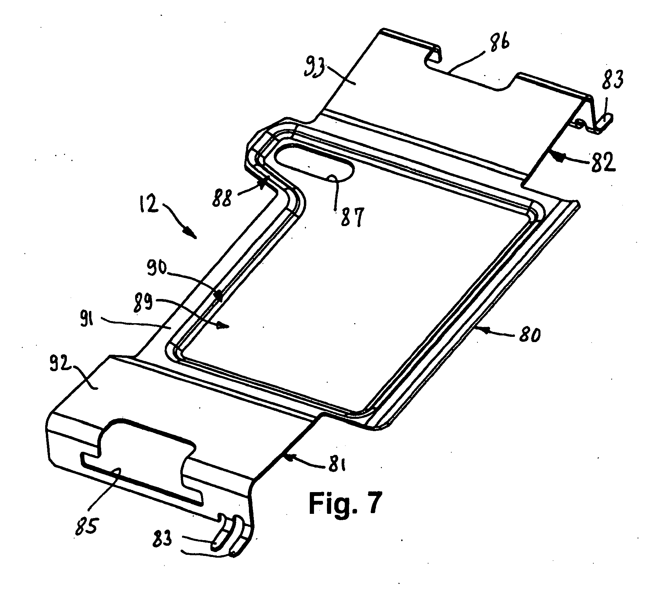

Insbesondere in den Figuren 1, 2 und 4 ist ein erfindungsgemäßer Kontaktträger oder Isolierkörper 11 dargestellt, der vorzugsweise zusammen mit dem in Fig. 7 gezeigten Deckel 12 den in Fig. 6 gezeigten Smart Card Connector 10 bildet.

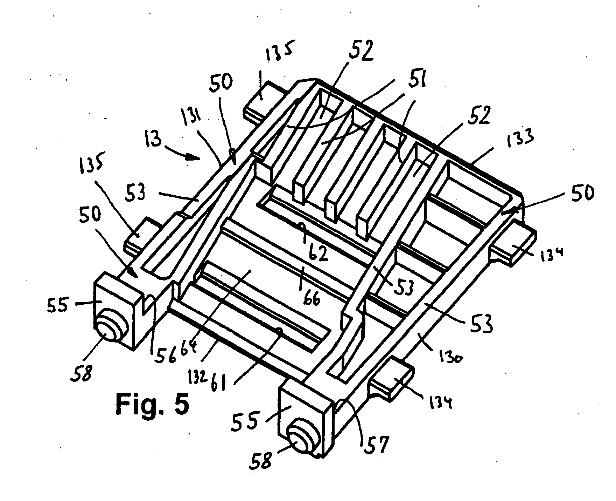

Im Kontaktträger 11 ist ferner ein Schieber oder Schlitten 13, wie er im Einzelnen in Fig. 5 gezeigt ist, hin und her bewegbar gelagert. Im Kontaktträger 11 sind Lesekontaktelemente, die im Folgenden als Lesekontakte 14, 15 bezeichnet werden, befestigt. Es ist eine Gruppe kurzer Lesekontakte 14 und eine Gruppe langer Lesekontakte 15 vorgesehen.

Ferner ist ein Endlagenschalter 17 im Kontaktträger 11 angeordnet, der durch die Smart Card (im Folgenden einfach "Karte) bei Erreichen der Leseposition betätigt wird.

### Der Kontaktträger 11:

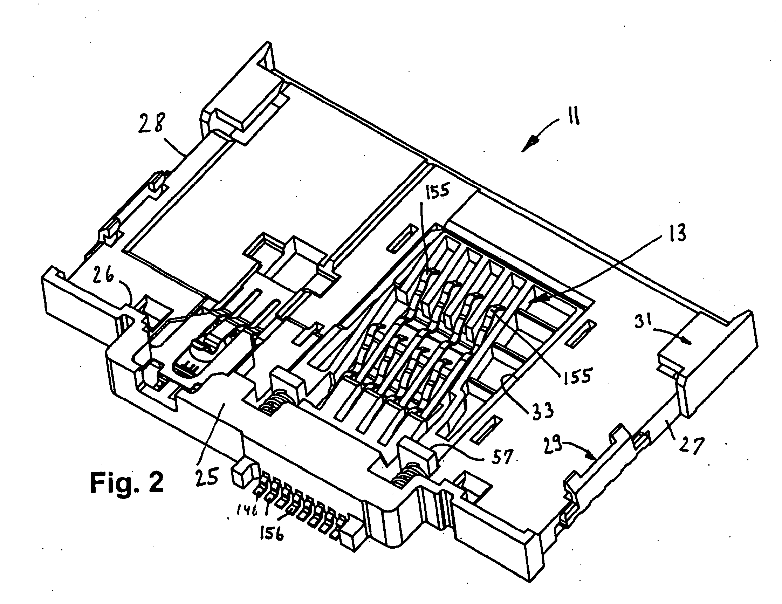

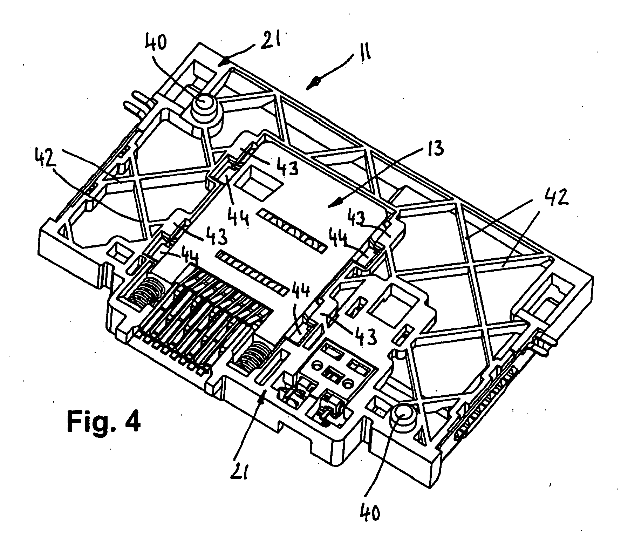

Der Kontaktträger 11 besitzt eine gut in den Figuren 1 und 2 zu sehende Oberseite und eine, insbesondere in Fig. 4 zu sehenden, Unterseite 21. Die Oberseite bildet eine Auflagefläche 22 und weitere Auflageflächen 23, sowie einen Auflagesteg 24. Am in Einsteckrichtung E hinteren Ende des Kontaktträgers 11 ist eine gegenüber den Auflageflächen 22, 23, 24 senkrecht hochragende Endwand 25 ausgebildet, die mehrere Kartenanlageflächen 26 bildet, die die Leseposition der Karte 1 definieren.

An den beiden beabstandeten von der Endwand 25 entgegen der Steckrichtung wegragenden Seiten 27, 28 des Kontaktträgers 1 ist jeweils ein Rast- und Karten-Führungsarm (bzw. Führungsnasen) 29, vorzugsweise einstückig mit dem Kontaktträger 11 ausgebildet, angebracht. Beidseitig seitlich benachbart zu einem Einsteckschlitz 5 für die Karte 1 sind eine seitliche und höhenmäßige Führung vorsehende, vorzugsweise U-förmige Führungswand 31 am Kontaktträger 11 ausgebildet.

Im Bereich der Auflagefläche 22 ist im Kontaktträger 11 eine diesen durchsetzenden Schieberaufnahmeöffnung 33 ausgebildet.

Ferner ragen von der Wand 25 Führungsnasen 34 entgegen der Einsteckrichtung E und bilden Führungsschlitze 35 für die kurzen Lesekontakte 14.

Wie man in Fig. 4 erkennt, sind an der Unterseite 21 des Kontaktträgers 11 Befestigungspfosten 40 geformt. Ferner sind Verstärkungsrippen 42 dargestellt, die ein geringes Gewicht für den Kontaktträger 11 gewährleisten. Im Bereich der Schiebeaufnahmeöffnung 33 sind, benachbart zu den Längsseiten 130, 131 des Schiebers 13, im Kontaktträger 11 Schieberführungen 43 ausgebildet, die durch dazu benachbarte Einsetzöffnungen 44 zugänglich sind, um das Einsetzen der vier Gleitstege 134, 135 des Schiebers 13 in den Kontaktträger 11 zu ermöglichen.

### Der Schieber 13:

Der in Fig. 5 gezeigte Schieber 13 bildet Auflageflächen 50 für eine eingesetzte Smart Card 1. Der Schieber 13 besitzt, wie erwähnt, zwei beabstandete Längsseiten 130 und 131, sowie zwei quer dazu verlaufende Querseiten 132 und 133. An der Längsseite 130 sind vorzugsweise beabstandet zwei Gleitstege 134 ausgebildet, und an der Längsseite 131 sind zwei Gleitstege 135 beabstandet ausgebildet. Von der Querseite 133 ragen Führungsrippen 51 in Längsrichtung zur Querseite hin weg, enden aber vor einer noch zu beschreibenden zweiten Vertiefung 62. Die Führungsrippen 51 bilden Führungskammern 52 für die langen Lesekontakte 15. Ferner sind Stege 53 ausgebildet, die zum Beispiel die Seitenwände 130, 131 bilden und die Stabilität des Schiebers 13 gewährleisten.

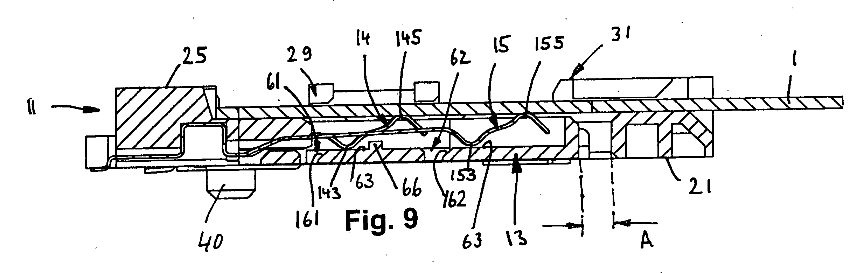

An der Querseite 132 sind gegenüber der Querseite 132 vorstehende Abwinkelungen 55 beidseitig, benachbart zu den jeweiligen Enden der Längsseiten 130, 131, ausgebildet. Jede der Abwinkelungen 55 weist eine Anlagefläche 56 bzw. 57 für die Smart Card 1 auf. Von den Abwinkelungen 55 ragen Federaufnahmevorsprünge 58 in Karteneinsteckrichtung E weg. In Fig. 5 nicht gezeigte, wohl aber in Fig. 1 gezeigte Rückstellfedern 60 erstrecken sich zwischen den Abwinkelungen 55 und stützen sich am Kontaktträger 11 ab. Die Rückstellfedern 60 sind vorzugsweise Schraubenfedern. Die Rückstellfedern 60 sind vorzugsweise in dem Kartenleser 1 nur einseitig gelagert. Vorzugsweise sind zwei Schraubenfedern 60 beabstandet vorgesehen. Die Rückstell-Schraubenfedern 60 ermöglichen eine einfache Montage. Ein Quersteg 66 verläuft zwischen einer ersten quer verlaufenden Vertiefung 61 und der bereits erwähnten zweiten quer verlaufenden Vertiefung 62. Benachbart zu den Vertiefungen 61 bzw. 62 sind - vgl. auch Fig. 9 - jeweils Kontaktauflageflächen 63, 64 vorgesehen. Die Kontaktauflagefläche 63 wird auch als die erste Kontaktauflagefläche bezeichnet und dient zur Auflage des langen Kontaktelements 15. Die Kontaktauflagefläche 64 wird auch als zweite Kontaktauflagefläche bezeichnet und dient als Auflagefläche für den kurzen Lesekontakt 14.

### Deckel 12:

Der Deckel 12 ist in Fig. 6 und in Fig. 7 gezeigt. Der Deckel 12 ist vorzugsweise ein Metalldeckel, der derart ausgebildet ist, dass er mit Vorspannung auf dem Kontaktträger 11 liegt, weshalb der bevorzugte Metalldeckel auch als Metalldeckelfeder bezeichnet werden kann. Alternativ kann der Metalldeckel gering gegenüber den Auflagenflächen 22, 23 beabstandet sein, um so einen Kartenschacht oder Kartenaufnahmeraum für die Karte 1 zu bilden. Diese Metalldeckelfeder ermöglicht eine flache Bauweise des Smart Card Connectors 10. Der Metalldeckel 12 weist einen Mittel-Andruckteil 80 mit jeweils davon anschließend einen ersten Flügel 81 und einen zweiten Flügel 82 auf. An den beiden Flügeln 81, 82 sind jeweils elektrische Anschlüsse 83 ausgebildet. Jeder der Flügel 81, 82 besitzt ferner eine Rastausnehmung 85, 86 zur Zusammenarbeit mit den Rast-/Führungsarmen 29 des Kontaktträgers 11. In einer Ausbuchtung des Andruckteils 80 ist eine Öffnung 87 ausgebildet. Ferner besitzt der Mittel-Andruckteil 80 eine Absenkung oder Vertiefung 89, die durch die abgestufte Seitenwand 90 gebildet wird. Die Oberseite des Mittel-Andruckteils 80 ist mit 91 bezeichnet, während der Flügel 81 eine Oberseite 92 und der Flügel 82 eine Oberseite 93 besitzt. Wie man erkennt, sind die beiden Flügel 82 etwas gegenüber der Oberseite 91 des Mittel-Andruckteils hochgebogen, um eine Federwirkung zu erreichen. Auf diese Weise kann der Metalldeckel 21 auf den Kontaktträger mit Vorspannung aufgesetzt werden, wobei die Rasterausnehmungen 85, 86 mit den entsprechenden Rast-/Führungsarmen 29 in Eingriff kommen. Der Metalldeckel 12 ist somit im dargestellten Ausführungsbeispiel als eine Metalldeckelfeder dargestellt, die zum einen eine flache Bauweise ermöglicht, und ferner auch als Kartenbremse dient. Bei eingesteckter Smart Card dient die Metalldeckelfeder 12 dazu, die Smart Card auf den Kontaktträger 11 zu drücken, so dass die Toleranzen der Karte für die Kontaktkräfte keine Rolle spielen.

### Die Lesekontakte 64, 65:

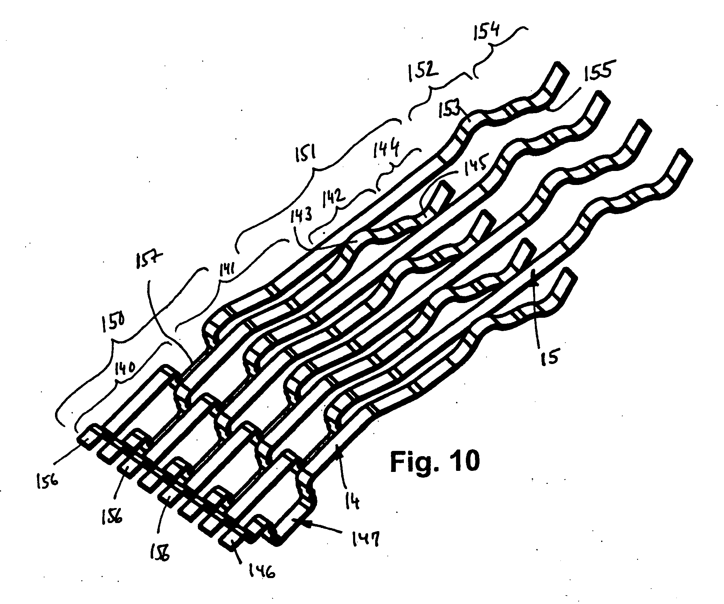

In Fig. 10 sind die kurzen Lesekontakte 14 und die langen Lesekontakte 15 in einer Anordnung dargestellt, wie sie in den Kontaktträger 11 eingebaut sind. Die kurzen Kontaktelemente 14 weisen jeweils einen Anschlussabschnitt 140, einen Federabschnitt 141, einen Ansteuerabschnitt 142 mit Ansteuerkuppe 143 und einen Kontaktabschnitt 144 mit Kontaktkuppe 145 auf.

Analog weisen die langen Lesekontakte 15 einen Anschlussabschnitt 150, einen Federabschnitt 151, einen Ansteuerabschnitt 152 mit Ansteuerkuppe 153 und einen Kontaktabschnitt 154 mit Kontaktkuppe 155 auf.

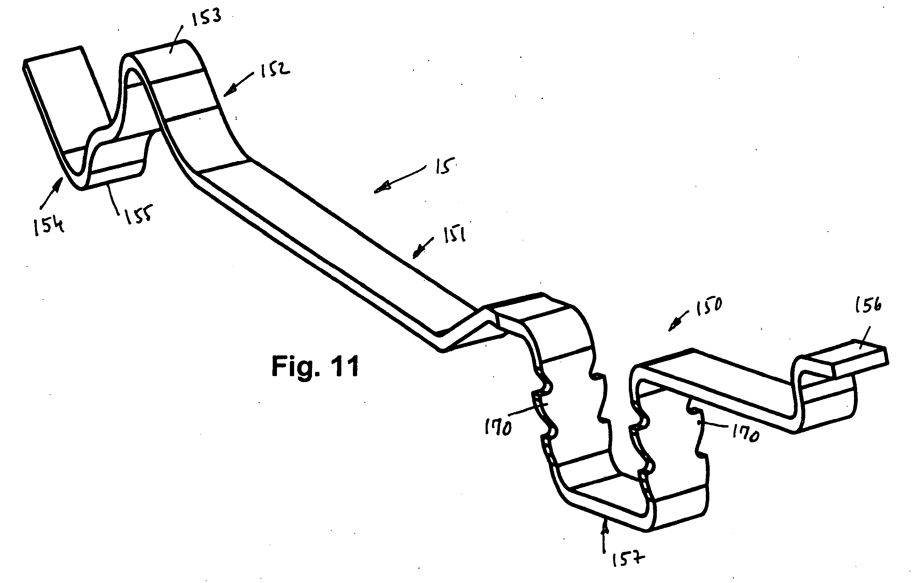

In Fig. 11 ist ein langer Lesekontakt 15 im Einzelnen dargestellt.

Der Anschlussabschnitt 150 besitzt zum einen eine aus dem Smart Card Connector 10 herausgeführte Anschlusszunge 156, und zum anderen einen vorzugsweise U-förmig gekrümmten Befestigungsabschnitt 157, der harpunenartige Rastnasen bzw. Befestigungskanten besitzt, um in eine entsprechende Vertiefung (nicht gezeigt des Kontaktträgers 11 eingepresst zu werden.

In ähnlicher Weise besitzt - vgl. Fig. 10 - der Anschlussabschnitt 140 des kurzen Lesekontakts 14 eine aus dem Smart Card Connector 10 herausgeführte Anschlusszunge 146 und einen vorzugsweise gekrümmten Befestigungsabschnitt 147 mit harpunenartigen Rastnasen.

Vorzugsweise verlaufen die Lesekontakte 14, 15 im Bereich ihrer Federabschnitte 141, 151 gegenüber dem Anschlussabschnitt 140, 150 gewinkelt und damit schräg im Leser 1 derart, dass die Kontaktkuppen 145, 155 benachbarter Lesekontakte 14, 15 hintereinander auf einer Linie parallel zur Einsteckrichtung E liegen.

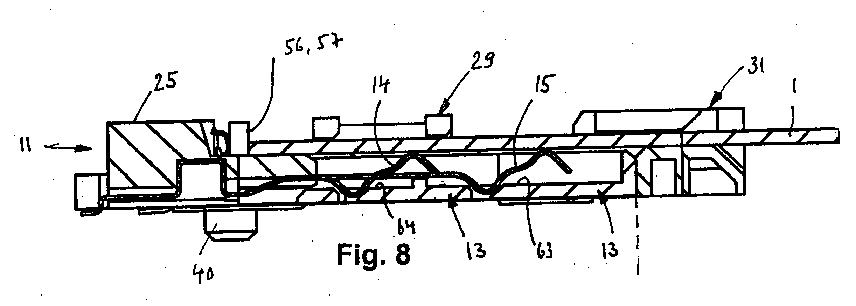

In den Figuren 8 und 9 und sei die Arbeitsweise des erfindungsgemäßen Smart Card Connectors erläutert. Die Figuren 8 und 9 sind zur Vereinfachung der Darstellung ohne den Metalldeckel 12 gezeigt.

In Fig. 8 ist die Karte 1 bereits weitgehend in Einsteckrichtung E eingesetzt, und hat bereits durch den Kontakt mit den Anschlägen 56, 57 des Schiebers ein geringfügiges Anheben der Lesekontakte 14, 15 in Richtung auf die Kontaktflächen der Karte 1 bewirkt. Man erkennt in Fig. 8, dass die Ansteuerkuppen 143, 153 auf die durch die Vertiefungen 61, 62 gebildeten Schrägen aufgelaufen und demzufolge leicht angehoben sind.

In Fig. 9 befindet sich die Karte 1 in ihrer Leseposition. Die Vorderkante der Karte 1 liegt an den Anlageflächen 26 des Kontaktkörpers 11 an und der Schieber befindet sich in seiner Endposition, wobei die Vorderkante der Karte 1 ebenfalls an den Anlageflächen 57 des Schiebers anliegt. In dem in Fig. 9 gezeigten Zustand sind die Lesekontakte 14, 15 in Kontakteingriff mit den Kontaktflächen der Smart Card 1, wobei die Ansteuerkuppen 143 bzw. 153 auf entsprechenden Kontaktauflageflächen 63, 64 des Schiebers 13 aufliegen, und so eine wohl definierte Kontaktandruckkraft auf die Kontaktflächen der Karte 1 ausüben. Die in Fig. 9 mit A bezeichnete Hubstrecke oder Bewegungsstrecke des Schiebers beträgt vorzugsweise nur wenige Millimeter, vorzugsweise ist diese Strecke bei einer Smart Card 1 üblicher Bauart etwa 2 mm.

### Positionsliste

- 1: Smart Card
- 5: Einschubschlitz
- 10: Smart Card Connector
- 11: Kontaktträger
- 12: Metalldeckel
- 13: Schieber oder Schlitten
- 14: KE, Lesekontakte kurz
- 15: KE, Lesekontakte lang
- 17: Endlagenschalter
- 20: Oberseite
- 21: Unterseite
- 22: Auflagefläche
- 23: Auflageflächen
- 24: Auflageflächesteg
- 25: Wand
- 26: Kartenanlegefläche
- 27: Seiten
- 28: Seiten
- 29: Rast- / Führungsnasen
- 30: Führungsfläche
- 31: seitliche + höhenmäßige Führungswand
- 33: Schieberaufnahmeöffnung
- 34: Führungsnasen
- 35: Führungsschlitze
- 40: Pfosten
- 41: Führungskammern ?
- 42: Verstärkungsrippen
- 43: Schieberführungen
- 44: Einsetzöffnungen
- 50: Auflageflächen des Schiebers
- 51: Führungsrippen
- 52: Führungskammer
- 53: Stege
- 55: Abwinklungen
- 56: Anlagefläche
- 57: Anlagefläche
- 58: Federaufnahmevorsprünge
- 60: Federn
- 61: erste Verbindung
- 62: zweite Verbindung
- 63: erste Kontaktauflagefläche
- 64: zweite Kontaktauflagefläche
- 66: Quersteg
- 80: Mittel-Andruckteil
- 81: erster Flügel
- 82: zweiter Flügel
- 83: Anschlüsse
- 85: Rastausnehmung
- 86: Rastausnehmung
- 87: Öffnung
- 88: Ausbuchtung
- 89: Vertiefung
- 90: abgestufte Seitenwand
- 91: Oberseite des Andruckteils
- 92: Oberseite des 1. Flügels
- 93: Oberseite des 2. Flügels
- 130: Längsseiten
- 131: Längsseiten
- 132: Querseiten
- 133: Querseiten
- 134: Gleitsteg
- 135: Gleitsteg
- 140: Anschlussabschnitt
- 141.: Federabschnitt
- 142: Ansteuerabschnitt mit
- 143: Ansteuerkuppe
- 144: Kontaktabschnitt
- 145: Kontaktkuppe
- 146: Anschlusszunge
- 147: Befestigungsabschnitt
- 150: Anschlussabschnitt
- 151: Federabschnitt
- 152: Ansteuerabschnitt mit
- 153: Ansteuerkuppe
- 154: Kontaktabschnitt
- 155: Kontaktkuppe
- 156: Anschlusszunge
- 157: Befestigungsabschnitt
- 161: Schräge
- 162: Schräge
- 170: Rasternasen bzw. Befestigungskanten

## Patentansprüche

1. Smart Card Connector (10) zur Aufnahme und Anordnung einer Smart Card (1) in einer Leseposition, wobei der Smart Card Connector (1) Folgendes aufweist:
einen Kontaktträger (11);
mindestens ein, vorzugsweise mehrere und insbesondere sechs Lesekontakte (14, 15),
deren jeder eine Kontaktkuppe (145, 155) zur Kontaktierung einer Kontaktzone der Smart Card (1) und
mindestens eine Ansteuerkuppe (143, 153) zum Verschwenken des Lesekontakts (14, 15) in seine Kontaktposition mit der Kontaktzone der Smart Card aufweist, und
wobei jedes Kontaktelement (14, 15) einen Anschlussabschnitt (140, 150) zur Befestigung am Kontaktträger (11) besitzt;
einen Schlitten (13), der im Kontaktträger (11) zwischen einer Ausgangsposition und einer Endposition hin und her bewegbar angeordnet ist, und
der Lesekontakt-Betätigungsmittel (61, 62) aufweist, die mit der Ansteuerkuppe (143, 153) derart in Eingriff bringbar sind, dass die Kontaktkuppe (143, 153) des Lesekontakt (14, 15) erst kurz vor Erreichen der Leseposition der Karte (1) an die zu kontaktierende Kontaktfläche der Karte (1) angedrückt wird, **dadurch gekennzeichnet, dass** die Lesekontakt-Betätigungsmittel eine Kontaktauflagefläche (63, 64) aufweisen, die zwischen einer ersten quer verlaufenden Vertiefung (61) und einer zweiten quer verlaufenden Vertiefung (62) verläuft, wobei die Kontaktkuppe sich in die entgegen gesetzte Richtung von der Ansteuerkuppe erstreckt und erst kurz vor Erreichen der Leseposition der Karte die Ansteuerkuppe auf der Kontaktauflagefläche (63, 64) aufliegt.

2. Smart Card Connector (10) nach Anspruch 1, der beim Einstecken der Smart Card in den Smart Card Connector (1) diese den Schlitten (13) auf den letzten Millimetern vor dem Anschlag der Karte (1) an Anschlagmitteln (26) des Kontaktträgers (11) verschiebt.

3. Smart Card Connector (10) nach Anspruch 2, wobei die letzten Millimeter vorzugsweise 2 mm betragen.

4. Smart Card Connector (10) nach Anspruch 3, wobei am Schlitten (13) die Lesekontakt-Betätigungsmittel in der Form von Schrägen (161, 162) ausgebildet sind.

5. Smart Card Connector (10) nach Anspruch 4, wobei die Schrägen (161, 162) durch Vertiefungen (61, 62) gebildet sind.

6. Smart Card Connector (10) nach Anspruch 5, wobei im Schlitten eine erste Vertiefung (61) und in Längsrichtung beabstandet, eine zweite Vertiefung (62) vorgesehen ist.

7. Smart Card Connector (10) nach Anspruch 6, wobei der Schlitten (13) benachbart zu dem Lesekontakt-Betätigungsmittel jeweils erste und zweite Kontaktauflageflächen (63, 64) bildet, auf denen die Lesekontakte (14, 15) im Kontaktzustand mit den Kontaktzonen der Smart Card mit den Ansteuerkuppen aufliegen.

8. Smart Card Connector (10) nach Anspruch 7, wobei zwei Gruppen von Lesekontakten (14, 15) vorgesehen sind, wobei die erste Gruppe Lesekontakte (14) enthält, die kürzer sind als die Lesekontakte (15) der zweiten Gruppe, und wobei die Lesekontakte der ersten und zweiten Gruppen abwechselnd und mit Abstand angeordnet sind, und mit ihren Befestigungsabschnitten am Kontaktträger derart befestigt sind, dass sie sich mit ihren freien Enden mit unterschiedlichen Abständen von dem Kontaktträger (11) weg erstrecken.

9. Smart Card Connector (10) nach Anspruch 8, wobei der Schlitten (13) Anlageflächen (56, 57) für die Anlage der Vorderkante einer Smart Card (1) aufweist.

10. Smart Card Connector (10) nach Anspruch 9, wobei der Schlitten (13) beabstandete Führungsrippen (51) aufweist, die Führungskammern (52) bilden, die zur Führung der einen Gruppe der Lesekontakte dienen, wobei die Führungskammern (52) schräg gegenüber den Längsseiten (130, 131) verlaufen.

11. Smart Card Connector (10) nach Anspruch 10, wobei der Kontaktträger (11) quer beabstandete Führungsnasen (34) aufweist, die von einer Wand (25) des Kontaktträgers (11) wegragen und Führungsschlitze (35) für die andere Gruppe der Lesekontakte bilden.

12. Smart Card Connector (10) nach Anspruch 11, wobei der eine Oberseite und eine Unterseite aufweisende Kontaktträger (11) eine Schieberaufnahmeöffnung (33) bildet, die sich von der Oberseite zur Unterseite erstreckt.

13. Smart Card Connector (10) nach Anspruch 12, wobei auf der Oberseite (20) des Kontaktträgers (11) ein Deckel (12), vorzugsweise ein Metalldeckel (12), angebracht ist.

14. Smart Card Connector (10) nach Anspruch 13, wobei der Metalldeckel (12) federnd als eine Metalldeckelfeder ausgebildet ist.

15. Smart Card Connector (10) nach Anspruch 14, wobei der Metalldeckel (12) durch Verrasten mit Rast- und Kartenführungsnasen (29) des Kontaktträgers (11) befestigt ist.

16. Smart Card Connector (10) nach Anspruch 15, **dadurch gekennzeichnet, dass** die Lesekontakte in den Kontaktträger (11) mit von den Lesekontakten gebildeten Befestigungsabschnitten (157) eingepresst sind.

17. Smart Card Connector (10) nach Anspruch 16, wobei jeder Lesekontakt einen Anschlussabschnitt (140, 150), einen Federabschnitt (141, 151), einen Ansteuerabschnitt (142, 152) mit Ansteuerkuppe (143, 153) und einen Kontaktabschnitt (144, 154) mit Kontaktkuppe (145, 155) aufweist.

18. Smart Card Connector (10) nach Anspruch 17, wobei der Anschlussabschnitt (140, 150) eine Anschlusszunge (146) sowie daran anschließend einen Befestigungsabschnitt (147, 157) aufweist, der vorzugsweise U-förmig gebogen ist, und Rastzähne aufweist.

19. Smart Card Connector (10) nach einem der vorhergehenden Ansprüche, wobei die von den Lesekontakten (14, 15) gebildeten Befestigungsabschnitte (147, 157) mit harpunenförmigen Rasternasen (170) versehen sind.

20. Smart Card Connector (10) nach einem der vorhergehenden Ansprüche, wobei die Lesekontakte (14, 15) im Bereich des Federabschnitts (141, 151) gegenüber dem Anschlussabschnitt (140, 150) gewinkelt, und damit schräg im Leser verlaufen, derart, dass die Kontaktkuppen (145, 155) benachbarter Lesekontakte (14, 15) hintereinander auf einer Linie parallel zur Einsteckrichtung E liegen.

21. Smart Card Connector (10) nach einem der vorhergehenden Ansprüche, wobei die Lesekontakte (14, 15) beim Einführen der Karte (1) bezogen auf die Einführebene angehoben werden, und zwar aus einer Ebene unterhalb der Kartenauflagefläche (22).

22. Smart Card Connector (10) nach einem oder mehreren der vorhergehenden Ansprüche, wobei Rückstellfedern (60) als Schraubenfedern ausgebildet sind, und in dem Kartenleser (1) nur einseitig gelagert sind, wodurch sich eine einfache Montage ergibt.

## Claims

1. A smart card connector (10) adapted to receive and place a smart card (1) in a reading position, said smart card connector (1) comprising:
a contact support (11);
at least one, preferably a plurality and specifically six reading contacts (14, 15), each of said reading contacts comprising a contact bulge (145, 155) for contacting a contact pad of the smart card (1) and at least one control bulge (143, 153) for pivoting the reading contacts (14, 15) into their contact position with the contact pad of the smart card, and
wherein each contact element comprises a termination section (140, 150) for mounting to the contact support (11);
a sliding element (13) reciprocally slidably mounted in said contact support (11) between an initial position and an end position, and
reading contact actuating means (61, 62) which can be brought into engagement with said control bulge (143, 153) such that the contact bulge (143, 153) of the reading contact (14, 15) is pressed against the contact pad of the card to be contacted only shortly before the card (1) reaches its reading position,
**characterised in that** the reading context actuating means comprise a contact support surface(63, 64) which extends between a first transversely extending recess (61) and a second transversely extending recess (62), wherein the contact bulge extends the opposite direction of the controlled bulge and, only shortly before the card reaches the reading opposition the controlled bulge will be in the bottom end with the contract bottom end surface (63,64).

2. The smart card connector (10) of claim 1, wherein said smart card, when it is inserted into the smart card connector (1), slidingly moves said sliding element (13) only on the last millimetres prior to the abutment of the card at abutment means (26).

3. The smart card connector (10) of claim 2, wherein the last millimetres comprise 2 millimetres.

4. The smart card connector (10) of claim 3, wherein inclined surfaces (161, 162) are formed at the sliding element (13) so as to provide said reader contact-actuating means.

5. The smart card connector (10) of claim 4, wherein said inclined surfaces (161, 162) are formed by recesses (61, 62).

6. The smart card connector (10) of claim 5, wherein a first recess (61) is provided in the sliding element and, longitudinally spaced therefrom a second recess (62) is provided.

7. The smart card connector (10) of claim 6, wherein said sliding element (13) forms adjacent to the reading contact actuating means conprising first and second contact support surfaces (63, 64) on which the reading contacts (14, 15) abut in contact condition at the contact pads of the smart card.

8. The smart card connector (10) of claim 7, wherein two groups of reading contacts (14, 15) are provided, the first group of reading contacts (14) comprising reading contacts (15) which are shorter than the reading contacts of the second group and wherein the reading contacts of the first and second groups are spaced and are alternately mounted at the contact support with their mounting sections such that the free ends of the contact elements project with different distances away from the contact support (11).

9. The smart card connector (10) of claim 8, wherein the sliding element (13) comprises abutment surfaces (56, 57) for the abutment of the front edge of a smart card (1).

10. The smart card connector (10) of claim 9, wherein the sliding element (13) comprises guide ribs (51) which form guide chambers (52) which serve for guiding the one group of reading contacts, and whereby the guide chambers (52) extend inclined with respect to the longitudinal sides (130, 131).

11. The smart card connector (10) of claim 10, wherein the contact support (11) comprises transversely spaced guide noses (34) projecting away from a wall (25) of the contact support (11) and forming guide slots (35) for the other group of reading contacts.

12. The smart card connector (10) of claim 11, wherein the contact support (11) comprises an upper surface and a bottom surface and forms a sliding element receiving opening (33) which extends between the upper surface and the bottom surface.

13. The smart card connector (10) of claim 12, wherein on the upper surface (20) of the contact support (11) a cover (12), preferably a metal cover (12) is mounted.

14. The smart card connector (10) of claim 13, wherein the metal cover (12) is designed as a resilient metal spring cover.

15. The smart card connector (10) of claim 14, wherein the metal cover (12) is mounted at detent and card guide noses (29) of the contact support (11).

16. The smart card connector (10) of claim 15, **characterized in that** the reading contacts (11) are pressed into the contact support (11) with mounting sections (157) formed by said reading contacts.

17. The smart card connector (10) of claim 16, wherein each of said reading contacts comprises a termination section (140, 150), a spring section (141, 151), a control section (142, 152) with a control bulge (143, 153) and a contact section (144, 154) with a contact bulge (145, 155).

18. The smart card connector (10) of claim 17, wherein the termination section (140, 150) comprises a termination tongue (1436) and subsequent thereto a mounting section (147, 157) which is preferably of U-shape and comprises detent teeth.

19. The smart card connector (10) according to one of the preceding claims, wherein the mounting sections (147, 157) formed by the reading contacts (14, 15) are provided with harpoon-shaped noses (170).

20. The smart card connector (10) according to one of the preceding claims, wherein the reading contacts (14, 15) are, in the area of the spring section (141, 151), angled with respect to the termination section (140, 150) and thus extend in an inclined direction in the smart card reader such that the contact bulges (145, 155) of adjacent reading contacts (14, 15) are located behind each other on a line parallel to the direction of insertion E.

21. The smart card connector (10) as set forth in one of the preceding claims, wherein the reading contacts (14, 15) of the card (1) are lifted with respect to the insert plane when the card (1) is inserted, said lifting movement starts from a plane below the card support surface (22).

22. The smart card connector (10) of one or more of the preceding claims, wherein the reset springs (60) are designed as coil springs and are located in the card reader (1) at only one side thus simplifying the mounting thereof.

## Revendications

1. Connecteur de carte à puce (10) adapté à recevoir et à placer une carte à puce (1) dans une position de lecture, le connecteur de carte à puce (1) comprenant :
un support de contact (11) ;
au moins un, et de préférence une pluralité et en particulier six contacts de lecture (14, 15), chacun des contacts de lecture comprenant un renflement de contact (145, 155) pour contacter un plot de contact de la carte à puce (1) et au moins un renflement de commande (143, 153) pour faire pivoter les contacts de lecture (14, 15) dans leur position de contact avec le plot de contact de la carte à puce, et
dans lequel chaque élément de contact comprend une partie de terminaison (140, 150) pour montage sur le support de contact (11) ;
un élément coulissant (13) monté pour coulisser en va-et-vient dans le support de contact (11) entre une position initiale et une position finale, et
un moyen d'actionnement de contact de lecture (61, 62) qui peut être amené en engagement avec le renflement de commande (143, 153) de sorte que le renflement de contact (143, 153) du contact de lecture (14, 15) est pressé contre le plot de contact de la carte pour être mis en contact seulement brièvement avant que la carte (1) n'atteigne sa position de lecture,
**caractérisé en ce que** le moyen d'actionnement de contact de lecture comprend une surface support de contact (63, 64) qui s'étend entre un premier évidement s'étendant transversalement (61) et un second évidement s'étendant transversalement (62), dans lequel le renflement de contact s'étend dans la direction opposée du renflement de commande et, seulement brièvement avant que la carte atteigne la position de lecture, le renflement de commande étant à l'extrémité inférieure de la surface d'extrémité inférieure de contact (63, 64).

2. Connecteur de carte à puce (10) selon la revendication 1, dans lequel la carte à puce, quand elle est insérée dans le connecteur de carte à puce (1) fait coulisser l'élément coulissant (13) seulement sur les derniers millimètres avant la butée de la carte sur des moyens de butée (26).

3. Connecteur de carte à puce (10) selon la revendication 2, dans lequel les derniers millimètres comprennent 2 millimètres.

4. Connecteur de carte à puce (10) selon la revendication 3, dans lequel des surfaces inclinées (161, 162) sont formées sur l'élément coulissant (13) de façon à former le moyen d'actionnement de contact de lecture.

5. Connecteur de carte à puce (10) selon la revendication 4, dans lequel les surfaces inclinées (161, 162) sont formées par des évidements (61, 62).

6. Connecteur de carte à puce (10) selon la revendication 5, dans lequel un premier évidement (61) est prévu dans l'élément coulissant et, espacé longitudinalement de celui-ci, un second évidement (62) est prévu.

7. Connecteur de carte à puce (10) selon la revendication 6, dans lequel l'élément coulissant (13) forme de façon adjacente au contact de lecture le moyen d'actionnement comprenant des première et seconde surfaces supports de contact (63, 64) sur lesquels les contacts de lecture (14, 15) butent dans un état de contact au niveau des plots de contact de la carte à puce.

8. Connecteur de carte à puce (10) selon la revendication 7, dans lequel deux groupes de contacts de lecture (14, 15) sont prévus, le premier groupe de contacts de lecture (14) comprenant des contacts de lecture (15) qui sont plus courts que les contacts de lecture du second groupe, et dans lequel les contacts de lecture des premier et second groupes sont espacés et sont montés de façon alternée au niveau du support de contact par leur section de montage de sorte que les extrémités libres des éléments de contact font saillie de distances différentes par rapport au support de contact (11).

9. Connecteur de carte à puce (10) selon la revendication 8, dans lequel l'élément coulissant (13) comprend des surfaces de butée (56, 57) pour une butée du bord avant d'une carte à puce.

10. Connecteur de carte à puce (10) selon la revendication 9, dans lequel l'élément coulissant (13) comprend des nervures de guidage (51) qui forment des chambres de guidage (52) qui servent à guider le premier groupe de contacts de lecture, les chambres (52) s'étendant de façon inclinée par rapport aux côtés longitudinaux (130, 131).

11. Connecteur de carte à puce (10) selon la revendication 10, dans lequel le support de contact (11) comprend des becs de guidage espacés transversalement (34) faisant saillie à partir d'une paroi (25) du support de contact (11) et formant des fentes de guidage (35) pour l'autre groupe de contacts de lecture.

12. Connecteur de carte à puce (10) selon la revendication 11, dans lequel le support de contact (11) comprend une surface supérieure et une surface inférieure et forme une ouverture de réception de l'élément coulissant (33) qui s'étend entre la surface supérieure et la surface inférieure.

13. Connecteur de carte à puce (10) selon la revendication 12, dans lequel, sur la surface supérieure (20) du support de contact (11), un couvercle (12), de préférence un couvercle de métal (12), est monté.

14. Connecteur de carte à puce (10) selon la revendication 13, dans lequel le couvercle de métal (12) est conçu comme un couvercle en ressort métallique élastique.

15. Connecteur de carte à puce (10) selon la revendication 14, dans lequel le couvercle de métal (12) est monté au niveau d'un ressort et des becs de guidage de carte (29) du support de contact (11).

16. Connecteur de carte à puce (10) selon la revendication 15, **caractérisé en ce que** les contacts de lecture (11) sont pressés dans le support de contact (11), des parties de montage (157) étant formées par les contacts de lecture.

17. Connecteur de carte à puce (10) selon la revendication 16, dans lequel chacun des contacts de lecture comprend une partie de terminaison (140, 150), une partie de ressort (141, 151), une partie de commande (142, 152) avec un renflement de commande (143, 153) et une partie de contact (144, 154) avec un renflement de contact (145, 155).

18. Connecteur de carte à puce (10) selon la revendication 17, dans lequel la partie de terminaison (140, 150) comprend une langue de terminaison (1436) et, après celle-ci, une partie de montage (147, 157) qui est de préférence une forme de U et comprend une dent de ressort.

19. Connecteur de carte à puce (10) selon l'une quelconque des revendications précédentes, dans lequel les parties de montage (147, 157) formées par les contacts de lecture (14, 15) sont munies de becs en forme de harpons (170).

20. Connecteur de carte à puce (10) selon l'une quelconque des revendications précédentes, dans lequel les contacts de lecture (14, 15) sont, dans la zone de la partie de ressort (141, 151), inclinés par rapport à la partie de terminaison (140, 150) et s'étendent ainsi dans une direction dans le lecteur de carte à puce de sorte que les renflements de contact (145, 155) des contacts de lecture adjacents (14, 15) sont disposés l'un derrière l'autre selon une ligne parallèle à la direction d'insertion E.

21. Connecteur de carte à puce (10) selon l'une quelconque des revendications précédentes, dans lequel les contacts de lecture (14, 15) de la carte (1) sont soulevés par rapport au plan d'insertion quand la carte (1) est insérée, le mouvement de soulèvement commençant à partir d'un plan compris en dessous de la surface support de carte (22).

22. Connecteur de carte à puce (10) selon l'une quelconque des revendications précédentes, dans lequel les ressorts de rappel (60) sont des ressorts hélicoïdaux et sont disposés dans le lecteur de carte (1) d'un seul côté, pour simplifier son montage.
